# EUROPÄISCHE PATENTSCHRIFT

(11) **EP 1 881 313 B1**
(45) Veröffentlichungstag und Bekanntmachung des Hinweises auf die Patenterteilung: **25.04.2012**
(21) Anmeldenummer: 07011997.9
(22) Anmeldetag: 19.06.2007
(51) Int. Cl.: G01L 5/28, G01M 17/007

(54) **Rollenbremsenprüfstand**
Roller brake test stand
Banc d'essai à rouleaux d'un frein

(30) Priorität: 19.07.2006 DE 202006011164 U; 17.01.2007 DE 202007001016 U
(43) Veröffentlichungstag der Anmeldung: 23.01.2008
(73) Patentinhaber: Snap-on Equipment Srl a unico socio, 42015 Correggio (RE) (IT)
(72) Erfinder: Erich, Seibl, 84577 Tussling (DE)
(74) Vertreter: Eisenführ, Speiser & Partner

(56) Entgegenhaltungen:
- EP-A2- 0 982 566
- DE-A1- 10 146 533
- US-A1- 2004 000 191

## Beschreibung

Die vorliegende Erfindung betrifft einen Rollenbremsprüfstand, dessen Bremskräfte ermittelt werden sollen.

Aus dem Stand der Technik .sind dabei Prüfstände mit zwei parallel zueinander ausgerichteten Rollen bekannt, auf welche ein Fahrzeugreifen aufgefahren wird, so dass er zwischen und oberhalb dieser beiden Rollen zu liegen kommt. Wenigstens eine der beiden Rollen wird dabei durch einen Antrieb angetrieben, um ihrerseits den aufliegenden Fahrzeugreifen in Drehbewegung zu versetzen. Wird der Fahrzeugreifen dabei abgebremst erhöht sich das erforderliche Antriebsmoment, was durch einen geeigneten Sensor als Bremskraft erfassbar ist.

Die bekannten Prüfstände weisen zwischen den beiden vorbeschriebenen Rollen eine Tastrolle auf, die vertikal verschieblich gelagert ist und dabei eine Schaltfunktion übernimmt. Sobald der Fahrzeugreifen auf die beiden Rollen auffährt, wird die dazwischenliegende Tastrolle nach unten gedrückt und schaltet dadurch die Prüfung frei bzw. startet den Rollenantrieb.

Derartige Prüfstände sind konstruktiv aufwändig und verschleißanfällig. Auch muss das Bedienpersonal während der Bremsenprüfung stets überwachen, ob das Fahrzeug die vorgegebene Ausrichtung beibehält oder etwa seitlich abdriftet. Dies macht die Bedienung wenig komfortabel.

Andere Prüfstände sind aus den Dokumenten US2004000191, EP0382566 und DE 10146533 schon bekannt.

Aufgabe der Erfindung ist es aber, einen vereinfachten Rollenbremsprüfstand anzubieten, der hinsichtlich seiner Konstruktion und auch Bedienung einfacher bzw. benutzerfreundlich gestaltet ist.

Die Aufgabe wird gelöst durch einen Rollenbremsenprüfstand nach Anspruch 1.

Die Erfindung geht von der Erkenntnis aus, dass die aus dem Stand der Technik bekannte Tastrolle eingespart werden kann, wenn wenigstens eine berührungslose Sensoreinheit zur Erfassung der Position des Fahrzeugreifens relativ zu wenigstens einer Rolle vorgesehen ist. Ein solcher berührungsloser Sensor erspart die bisher bekannte Tastrolle und vereinfacht den Aufbau des Prüfstands erheblich. Stattdessen kann die Sensoreinheit das Auffahren eines Fahrzeugreifens auf die Prüfstandrollen berührungslos und genau erkennen und die Prüfung mittels einer Steuereinheit freigeben bzw. starten. Die Sensoreinheit benötigt nur geringen Bauraum; ist verschleißarm und vermag darüber hinaus auch genaue Positionssignale zu liefern um ein eventuelles Abweichen des Fahrzeugreifens von der vorgegebenen Spur zu detektieren. Dies erhöht vorteilhaft die Bedienung und Sicherheit des Prüfstands und vereinfacht zugleich den konstruktiven Aufwand bei geringerem Verschleiß- bzw. Ausfallrisiko.

In einer einfachsten Ausführungsform ist ein Rollenbremsprüfstand vorgesehen, mit wenigstens einer Rolle, die über einen Antrieb angetrieben wird. Die Rolle ihrerseits soll einen an der Rolle anliegenden Fahrzeugreifen antreiben, wozu der Fahrzeugreifen oberhalb oder dazu versetzt seitlich auf die Rolle aufgefahren wird. Erfindungsgemäß ist weiterhin vorgesehen, dass der Prüfstand wenigstens eine berührungslose Sensoreinheit umfasst, mit der die Position des Reifens relativ zu der angetriebenen Rolle erfassbar ist. Ein auf die Rolle auffahrender Fahrzeugreifen lässt sich somit berührungslos und verschleißarm erkennen, wobei das Sensorsignal zur weiteren Steuerung des Prüfstands auswertbar ist.

Eine weitere vorteilhafte Ausführungsform der Erfindung sieht vor, dass die wenigstens eine Sensoreinheit eine Triangulationssensoreinheit ist. Von einem Sender wird dabei das zu detektierende Objekt angepeilt, während ein Empfänger die vom Objekt zurückfallende Reflexion aufnimmt. Bei bekanntem Abstand von Sender zum Empfänger und zu messendem Einfalls- bzw. Ausfallswinkel lässt sich auf diese Weise die Lage des Objekts in der Ebene oder in erweiterter Form auch im Raum feststellen. Typischerweise kann der Sender eine Lichtquelle, zumeist eine Laserlichtquelle umfassen, während der Empfänger das reflektierte Streulicht aufnimmt. Derartige Sensorsysteme können die Lage eines Objekts mit sehr großer Genauigkeit erfassen und sind gleichzeitig verschleißarm und einfach in der Handhabung.

In diesem Sinne ist gemäß einer weiteren vorteilhaften Ausführungsform der Erfindung vorgesehen, dass die Sensoreinheit zur Erfassung eines horizontalen Abdriftens des Reifens aus einer vorgebbaren Sollposition ausgebildet ist. Damit soll insbesondere eine axiale Verschiebung des Fahrzeugreifens in Längsrichtung der antreibenden Rolle(n) erkennbar sein. Sobald der Reifen außerhalb vorgebbarer Toleranzen in axialer Richtung verschoben wird könnte das entsprechende Signal zur Abschaltung des Prüfstands oder Ausgabe eines Warnhinweises verwendet werden. Dadurch wird vorteilhaft sichergestellt, dass der Fahrzeugreifen nicht seitlich über die antreibende Rolle hinauswandert oder an die begrenzende Kante eines Ausschnitts in einem Bodenblech heranläuft, unterhalb dessen die Rollen des Prüfstands angeordnet sind. Damit wird zum einen der beschädigende Verschleiß des Fahrzeugreifens vermieden, andererseits werden die dann verfälschten Bremsmesswerte sicher ausgeschlossen.

Gemäß einer weiteren vorteilhaften Ausführungsform der Erfindung soll die Sensoreinheit zur Erfassung eines Reifens ausgebildet sein, der sich senkrecht zur Achse der Prüfstandrollen bewegt. Dies könnte dann geschehen, wenn die Bremskraft groß genug ist, um das Fahrzeug über die antreibende Rolle hinweg nach vorne oder hinten zu ziehen. Auch in diesem Fall würde der Fahrzeugreifen die vorgegebene Sollposition, nämlich die symmetrische Lage auf der einen bzw. zwischen zwei Prüfstandrollen verlassen. Eine solche Sensoreinheit ist erfindungsgemäß dazu in der Lage, sowohl einen auf einer Rolle auffahrenden als auch von dieser herunterfahrenden Reifen zu erkennen. Das Sensorsystem, welches zur Erfassung derartiger Relativbewegungen des Reifens ausgebildet ist, ermöglicht auch hier wieder die Ausgabe eines Warnsignals oder die Abschaltung des Prüfstands ohne unnötige zeitliche Verzögerung und insbesondere automatisch, also ohne Eingriffserfordernis des Bedienpersonals.

Eine weitere Ausführungsform der Erfindung sieht vorteilhaft eine Steuereinheit zur Steuerung des Prüfstands vor, welche zur Auswertung wenigstens eines Signals der Sensoreinheit ausgebildet ist. Die Steuereinheit vermag dabei in Abhängigkeit der ihr zugeführten Signale der wenigstens einen Sensoreinheit weitere Funktionen des Prüfstands zu steuern, wie insbesondere die Zuschaltung oder Abschaltung des Antriebs der Rolle oder auch die Ausgabe von Warnsignalen. Die vom Sensorsystem ausgehenden Signale können weiterhin auch zur Dokumentation des zeitlichen Verlaufs der Bremsprüfung herangezogen werden, in dem beispielsweise mit Auffahren des Fahrzeugreifens die Zeit für den dann gestarteten Prüfversuch aufgezeichnet wird.

Insbesondere soll die Steuereinheit zur Ausgabe eines Signals und/oder zur Ab- oder Zuschaltung des wenigstens einen Antriebs ausgebildet sein, sofern die Sensoreinheit eine Bewegung des Reifens relativ zur Rolle außerhalb vorgebbarer Toleranzen signalisiert. Dies erlaubt den sicheren Betrieb des Prüfstands innerhalb der vorgegebenen Toleranzen und gestattet die automatische Abschaltung beispielsweise für den Fall, dass der Fahrzeugreifen sich in axialer Richtung zu weit verlagert, auf eine Prüfrolle zu weit aufläuft etc.

Die Messgenauigkeit der Sensoreinheit kann nach einer weiteren vorteilhaften Ausführungsform der Erfindung soweit erhöht werden, dass auch die Rotation bzw. Drehzahl des Fahrzeugreifens ermittelbar ist. Dazu wird die Sensoreinheit erfindungsgemäß auf unregelmäßige Formgebungen des rotierenden Fahrzeugreifens gerichtet. Dies kann eine von Öffnungen durchsetzte Fahrzeugfelge, das Reifenventil oder sogar das Reifenprofil sein. Je nach Messgenauigkeit des eingesetzten Sensors ermittelt dieser bei umlaufenden Fahrzeugreifen unterschiedliche "Positionen" des Fahrzeugreifens beispielsweise immer dann, wenn die umlaufende Ausnehmung der Fahrzeugfelge oder das Reifenventil die angepeilte Zone durchläuft. Diese regelmäßigen bzw. wiederkehrenden Veränderungen der Messwerte erlauben in einfacher Weise Rückschlüsse auf die Drehzahl bzw. deren genaue Ermittlung.

Aus sicherheitstechnischen Gründen ist es oft ratsam, die Inbetriebnahme des Fahrzeugprüfstands von dem tatsächlichen Vorhandensein eines Fahrzeugs auf dem Prüfstand abhängig zu machen. So ist insbesondere beim Einsatz der berührungslosen Sensoren zunächst nicht ohne Weiteres zu erkennen, ob dieser Sensor tatsächlich einen Fahrzeugreifen oder möglicherweise einen anderen Gegenstand bzw. den Fuß oder das Bein eines Bedieners detektiert, wenn dieser in den Erfassungsbereich des Sensors gelangt. Ohne eine zuverlässige Kontrolle dahingehend, ob tatsächlich ein Fahrzeugreifen in den Prüfstand eingefahren ist würde dieser in Betrieb genommen werden. Sofern ein Bediener unabsichtlich in den Erfassungsbereich des Sensors gerät würde die wenigstens eine Rolle angetrieben werden, was eine erhebliche Gefährdung der Betriebssicherheit darstellt.

Aus diesem Grund sieht eine weitere vorteilhafte Ausführungsform der Erfindung vor, dass vor Inbetriebnahme des Prüfstands (vor Antrieb der Rolle bzw. Rollen) sichergestellt wird, dass tatsächlich ein Fahrzeug (und nicht ein anderes Objekt) in den Prüfstand eingefahren und in den Erfassungsbereich des Sensors gelangt ist.

Eine einfache Sicherheitsmaßnahem bezieht sich dabei auf Prüfstände mit üblicherweise zwei nebeneinander angeordneten Rollen bzw. Rollenpaaren (bspw. für jedes Vorderrad ein Rollenpaar). Da beim Einfahren eines Fahrzeugs beide Rollenpaare im wesentlichen zeitgleich (innerhalb vorgebbarer Toleranz) befahren werden, muss bei Überschreiten dieser Toleranz davon ausgegangen werden, dass an wenigstens einem Rollenpaar nicht ein Fahrzeugreifen, sondern ein anderer Gegenstand detektiert wurde. In diesem Fall soll die Zuschaltung der Rollenantriebe unterbunden oder nur durch besondere Freigabe möglich sein. Dadurch wird vorteilhaft sichergestellt, dass nur im Falle eines in den Prüfstand eingefahrenen Fahrzeugs die Bremsprüfung mit Zuschaltung der Antriebe beginnen kann.

Dazu ist vorteilhaft eine Steuereinheit des Prüfstandes so ausgebildet, dass die Antriebe der Rollen nur dann zugeschaltet werden können, wenn die berührungslosen Sensoren, insbesondere Triangulationssensoren, innerhalb eines vorgebbaren Zeitfensters an zwei getrennten Rollen oder Rollenpaaren des Prüfstandes ein Objekt detektieren. Wird das Zeitfenster überschritten, so könnte ferner ein Hinweissignal ausgegeben oder die Zuschaltung der Antriebe durch bewusste Bestätigung gleichwohl veranlasst werden.

Eine weitere, sicherheitstechnisch bedeutsame Ausführungsform der Erfindung zieht die eigentliche Auffahrbewegung des Fahrzeugs zu dessen Erkennung heran. Typischerweise werden die Rollen beim Auffahren eines Fahrzeugs kurzfristig in eine Drehung versetzt bis das Fahrzeug seine vorgesehene Prüfposition erreicht hat. Eine solche Drehbewegung ist detektierbar, was insbesondere über die mit den Rollen gekoppelten Kraftaufnehmer erfolgen kann. Diese kurze Drehung erzeugt damit ein messbares Signal, welches einer Steuereinheit des Prüfstands zugeführt werden kann. Erfindungsgemäß ist der Prüfstand dabei so ausgebildet, dass die Rollen erst dann angetrieben werden, wenn eine solche kurzfristige (von einem Fahrzeugreifen) verursachte Drehbewegung erkannt wird und anschließend der berührungslose Sensor das Vorhandensein eines Objekts (dann handelt es sich mit hoher Sicherheit um einen Fahrzeugreifen) detektiert. Ohne vorausgehende Drehbewegung der wenigstens einen Rolle soll die Steuerung erfindungsgemäß den Antrieb des Prüfstands blockieren, selbst wenn der berührungslose Sensor in seinem vorgesehenen Erfassungsbereich ein Objekt erkennt.

Die Zuschaltung der Antriebe kann dabei insbesondere davon abhängig gemacht werden, dass die Drehbewegung der Rolle in engem zeitlichen Abstand zur anschließenden Erfassung des eingefahrenen Objekts durch den Sensor erfolgt und andernfalls der Antrieb unterbleibt.

Das durch das auffahrende Fahrzeugrad an der überfahrenen Rolle kurzfristig erzeugte Drehbewegungssignal reduziert typischerweise einen im Ruhebetrieb des Prüfstands vorliegenden konstanten Signalwert. Während der eigentlichen Bremsprüfung weicht der an den Kraftaufnehmern gemessene Wert dagegen in positiver Richtung nach oben ab. (Beispielsweise liegt im Ruhebetrieb ein Signal von 1 mA vor. Beim Einfahren des Fahrzeugreifens wird dieses Signal auf beispielsweise 0,5 mA kurzfristig reduziert, um danach wieder auf 1 mA anzusteigen. Im Rahmen der Bremsprüfung steigt das Signal in positiver Richtung an auf typischerweise 5 bis 10 mA).

Durch die kurzfristig negative Auslenkung des Kraftaufnehmersignals entgegen der sonst üblichen positiven Auslenkung beim Bremsbetrieb vermag die Steuereinheit dieses "Auffahrsignal" leicht zu erkennen und auszuwerten. In Verbindung mit dem anschließend oder auch zeitgleich erwarteten Detektionssignal des berührungslosen Sensors wird dann das Zuschaltkriterium für den Antrieb der wenigstens einen Rolle erfüllt. Unterbleibt dieser negative Ausschlag des Kraftaufnehmersignals soll erfindungsgemäß das Signal des berührungslosen Sensors nicht ausreichen, um den Bremsbetrieb aufzunehmen.

Mittels geeigneter Steuereinheit lässt sich - analog zur vorbeschrieben Ausführung mit den Triangulationssensoren - auch hier eine Zuschaltung der Antriebe von zwei getrennten Rollen oder Rollenpaaren davon abhängig machen, dass für beide Rollen/Rollenpaare innerhalb eines vorgebbaren Zeitfensters eine Auffahrbewegung registriert wird. Andernfalls muss davon ausgegangen werden, dass nicht ein Fahrzeug, sondern ein anders Objekt wenigstens eine Rolle in Drehbewegung versetzt hat, so dass die Zuschaltung der Antriebe sicherheitshalber unterbleibt.

Weitere vorteilhafte Ausführungsformen der Erfindung ergeben sich aus den Unteransprüchen.

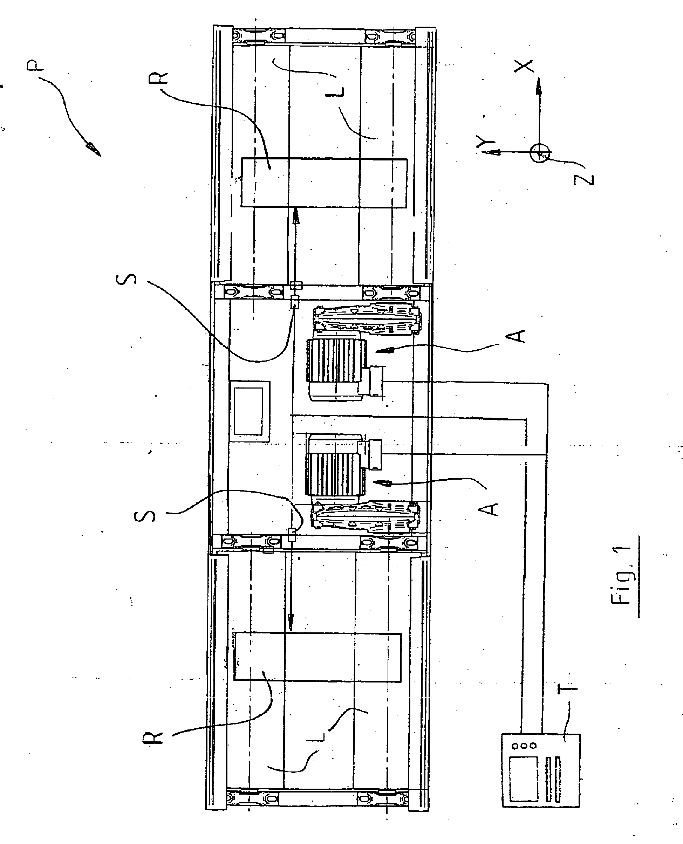

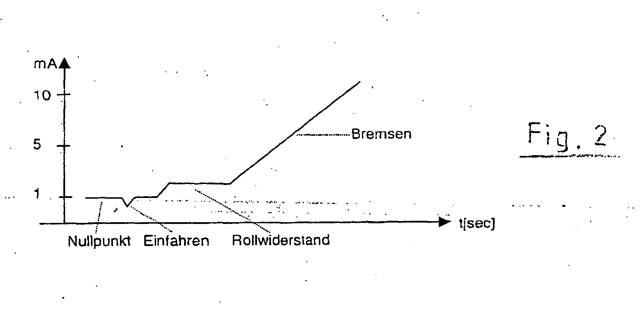

Nachfolgend wird eine Ausführungsform der Erfindung anhand der Figuren 1 und 2 erläutert.

In Fig. 1 ist in schematischer Draufsicht ein erfindungsgemäßer Prüfstand P zu sehen.
Der Prüfstand P hat im Wesentlichen symmetrische Gestalt und dient zur gleichzeitigen Aufnahme zweier Vorder- oder Hinterräder R eines Kraftfahrzeugs.

Auf jeder Seite des Prüfstands P sind zwei Rollen L angeordnet, wobei die jeweils untere Rolle L durch einen Antrieb A antreibbar ist. Ein Fahrzeugreifen R ruht im Betriebsfall auf den beiden benachbart angeordneten Rollen L und wird durch die angetriebene Rolle seinerseits zur Rotation angeregt. Im Bereich der Rollenlager seitlich der Fahrzeugreifen R sind zwei Triangulationssensoren S angeordnet, die die Position jedes Reifens R in der Ebene oder im Raum erfassen. Die beiden Sensoren S und die Antriebe A sind mit einer Auswerte- und Steuereinheit T verbunden, in der die Signale der Sensoren S ausgewertet und gegebenenfalls in Steuersignale für die Antriebe A umgewandelt werden können. Auch die Ausgabe optischer oder akustischer Signale soll über die Steuereinheit T möglich sein.

Jeder Triangulationssensor S ermöglicht es, eine räumliche Bewegung des Fahrzeugreifens R außerhalb vorgebbarer Toleranzen bzw. relativ zu den Rollen L zu erkennen. Dabei kann es sich um eine axiale Abweichung in Richtung X ebenso handeln, wie um eine Bewegung radial zu den Rollen L, also in Richtung Y oder Z. Sobald eine solche Bewegung außerhalb vorgegebener Toleranzen erkannt wird, vermag die zugehörige Auswerte- und Steuereinheit entsprechende Signale bzw. Schaltbefehle auszugeben, um den sicheren und zeitoptimierten Betrieb des Prüfstands zu sichern.

Fig. 2 zeigt den Signalverlauf an einem erfindungsgemäßen Prüfstand unter besonderer Berücksichtigung des "Einfahrsignals". Zu erkennen ist dort der Strom eines Kraftaufnehmers, aufgetragen in mA über der Zeit (t). Der Nullpunktstrom liegt bei etwa 1 mA. Beim Einfahren eines Fahrzeugs mit kurzfristiger Drehbewegung der Rolle fällt das Signal kurzfristig auf einen Wert unterhalb 1 mA ab. Sobald die Rolle wieder zum Stillstand gekommen ist erreicht der Strom wieder den Ausgangswert von ca. 1 mA. Bei Durchführung des eigentlichen Bremsversuchs steigt der gemessene Strom in positiver Richtung an.

Der kurzfristige Stromabfall zum Zeitpunkt des Einfahrens lässt sich durch die erfindungsgemäße Steuereinheit leicht erfassen und dahingehend auswerten, dass als Sicherheitskriterium die Zuschaltung der Rollenantriebe nur dann erfolgt, wenn vor der Detektion eines Objekts durch den berührungslosen Sensor ein solches Einfahrsignal erkannt wurde.

## Patentansprüche

1. Rollenbremsprüfstand (P) für Fahrzeuge, deren Bremskräfte ermittelt werden sollen,
a) wobei wenigstens eine Rolle (L) vorgesehen ist, die über einen Antrieb (A) angetrieben wird, um ihrerseits einen an der Rolle (L) anliegenden Fahrzeugreifen (R) anzutreiben, **dadurch gekennzeichnet dass**
b) der Prüfstand (P) wenigstens eine berührungslose Sensoreinheit (S) zur Erfassung der Position des Reifens (R) relativ zur wenigstens einen Rolle (L) aufweist, und
c) wobei eine Steuereinheit (T) zur Steuerung des Prüfstands (P) vorgesehen ist, welche zur Auswertung wenigstens eines Signals der Sensoreinheit (S) ausgebildet ist, wobei die Steuereinheit (T) zur Erfassung einer durch einen auffahrenden Reifen (R) verursachten Drehbewegung der wenigstens einen Rolle (L) ausgebildet ist, und wobei die Steuereinheit (T) weiterhin zur Zuschaltung des wenigstens einen Antriebs (A) ausgebildet ist, sofern der Sensor (S) nach Erfassung der Drehbewegung einen auf die wenigstens eine Rolle (L) aufgefahrenen Reifen (R) detektiert.

2. Rollenbremsprüfstand nach Anspruch 1,
**dadurch gekennzeichnet, dass**
die wenigstens eine Sensoreinheit (S) eine Triangulationssensoreinheit ist.

3. Rollenbremsprüfstand nach einem der vorhergehenden Ansprüche,
**dadurch gekennzeichnet, dass**
die Sensoreinheit (S) zur Erfassung eines horizontalen Abdriftens des Reifens (R) aus einer vorgebbaren Sollposition in einer horizontalen Richtung (X) ausgebildet ist.

4. Rollenbremsprüfstand nach einem der vorhergehenden Ansprüche,
**dadurch gekennzeichnet, dass**
die Sensoreinheit (S) zur Erfassung eines in (Y)-Richtung und/oder (Z)-Richtung relativ zu der wenigsten einen Rolle (L) bewegten Reifens (R) ausgebildet ist, wobei die Richtungen (Y) und (Z) zueinander und zu einer horizontalen Richtung (X) senkrecht verlaufen.

5. Rollenbremsenprüfstand nach dem vorhergehenden Anspruch,
**dadurch gekennzeichnet, dass**
die Sensoreinheit (S) zur Erfassung eines auf die wenigstens eine Rolle (L) auffahrenden oder von dieser herunterfahrenden Reifens (R) ausgebildet ist.

6. Rollenbremsprüfstand nach einem der vorhergehenden Ansprüche,
**dadurch gekennzeichnet, dass**
die Steuereinheit zur Ausgabe eines Signals und/oder zur Ab- oder Zuschaltung des wenigstens einen Antriebs (A) ausgebildet ist, sofern die Sensoreinheit (S) eine Bewegung des Reifens (R) relativ zur Rolle (L) außerhalb vorgebbarer Toleranzen signalisiert.

7. Rollenbremsprüfstand nach einem der vorhergehenden Ansprüche,
**dadurch gekennzeichnet, dass**
die Sensoreinheit (S) auf unregelmäßige Formgebungen des rotierenden Fahrzeugreifens (R) ausrichtbar ist, um **dadurch** dessen Rotation und/oder Rotationsgeschwindigkeit zu ermitteln.

8. Rollenbremsprüfstand nach einem der vorhergehenden Ansprüche mit zwei voneinander getrennten Rollen (L1, L2) bzw. Rollenpaaren für je einen Fahrzeugreifen (R1, R2), sowie jeweils wenigstens einer zugehörigen berührungslosen Sensoreinheit (S1, S2) und mit der Steuereinheit (T),
**dadurch gekennzeichnet, dass**
die Steuereinheit (T) zur Zuschaltung des wenigstens einen Antriebs (A) ausgebildet ist, sofern innerhalb eines vorgebbaren Zeitfensters beide Sensoren (S1, S2) ein Objekt detektieren.

9. Rollenbremsprüfstand nach einem der vorhergehenden Ansprüche,
**dadurch gekennzeichnet, dass**
die Steuereinheit (T) zur Zuschaltung des Antriebs (A) ausgebildet ist, wenn der aufgefahrene Reifen (R) innerhalb einer vorgebbaren Zeitspanne nach der Erfassung der Drehbewegung detektiert wird.

10. Rollenbremsprüfstand nach dem vorhergehenden Anspruch, mit zwei voneinander getrennten Rollen (L1, L2) bzw. Rollenpaaren für je einen Fahrzeugreifen (R1, R2) und mit der Steuereinheit (T),
**dadurch gekennzeichnet, dass**
die Steuereinheit (T) zur Zuschaltung des wenigstens einen Antriebs (A) ausgebildet ist, sofern innerhalb eines vorgebbaren Zeitfensters für beide Rollen (L1, L2) bzw. Rollenpaare eine Drehbewegung erfasst wird.

## Claims

1. A roller brake testing dynamometer (P) for vehicles whose braking forces are to be ascertained,
a) wherein there is provided at least one roller (L) which is driven by way of a drive (A) in order in turn to drive a vehicle tyre (R) bearing against the roller (L), **characterised in that**
b) the dynamometer (P) has at least one contact-less sensor unit (S) for detecting the position of the tyre (R) relative to the at least one roller (L), and
c) wherein a control unit (T) is provided for controlling the dynamometer (P), which is adapted to evaluate at least one signal from the sensor unit (S), wherein the control unit (T) is adapted to detect a rotary movement (W) of the at least one roller (L), caused by a tyre (R) driving on to the dynamometer, and wherein the control unit (T) is further adapted to switch on the at least one drive (A) if the sensor (S), after detection of the rotary movement (W), detects a tyre (R) which has driven on to the at least one roller (L).

2. A roller brake testing dynamometer according to claim 1 **characterised in that** at least one sensor unit (S) is a triangulation sensor unit.

3. A roller brake testing dynamometer according to one of the preceding claims **characterised in that** the sensor unit (S) is adapted to detect a horizontal drift of the tyre (R) out of a predeterminable reference position in a horizontal direction (X).

4. A roller brake testing dynamometer according to one of the preceding claims **characterised in that** the sensor unit (S) is adapted to detect a tyre (R) which is moved in the (Y)-direction and/or (Z)-direction
relative to the at least one roller (L), wherein the directions (Y) and (Z) extend perpendicularly relative to each other and to a horizontal direction (X).

5. A roller brake testing dynamometer according to the preceding claim **characterised in that** the sensor unit (S) is adapted to detect a tyre (R) which is driving on to the at least one roller (L) or which is driving down therefrom.

6. A roller brake testing dynamometer according to one of the preceding claims **characterised in that** the control unit is adapted to output a signal and/or to switch the at least one drive (A) off or on if the sensor unit (S) signals a movement of the tyre (R) relative to the roller (L) outside predeterminable tolerances.

7. A roller brake testing dynamometer according to one of the preceding claims **characterised in that** the sensor unit (S) can be oriented on to irregular shape configurations of the rotating vehicle tyre (R) in order thereby to ascertain its rotation and/or rotary speed.

8. A roller brake testing dynamometer according to one of the preceding claims having two mutually separate rollers (L1, L2) or pairs of rollers for a respective vehicle tyre (R1, R2) and at least one respective associated contact-less sensor unit (S1, S2) and having the control unit (T) **characterised in that** the control unit (T) is adapted to switch on the at least one drive (A) if both sensors (S1, S2) detect an object within a predeterminable time window.

9. A roller brake testing dynamometer according to one of the preceding claims **characterised in that** the control unit (T) is adapted to switch on the drive (A) if the tyre (R) which has been driven on is detected within a predeterminable time interval after detection of the rotary movement.

10. A roller brake testing dynamometer according to the preceding claim having two mutually separate rollers (L1, L2) or pairs of rollers for a respective vehicle tyre (R1, R2) and having the control unit (T), **characterised in that** the control unit (T) is adapted to switch on the at least one drive (A) if a rotary movement is detected within a predeterminable time window for both rollers (L1, L2) or pairs of rollers.

## Revendications

1. Banc d'essai à rouleaux (P) d'un frein pour des véhicules, dont on doit déterminer les forces de freinage,
a) dans lequel il est prévu au moins un rouleau (L), qui est entraîné par un entraînement (A), pour entraîner de son côté un pneumatique (R) de véhicule s'appliquant au rouleau, **caractérisé en ce que**
b) le banc d'essai (P) comporte au moins une unité (S) de capteur sans contact pour la détection de la position du pneumatique (R) par rapport au au moins un rouleau (L), et
c) dans lequel il est prévu, pour la commande du banc d'essai (P), une unité (T) de commande, qui est constituée pour exploiter au moins un signal de l'unité (S) de capteur, l'unité (T) de commande étant constituée pour la détection d'un mouvement de rotation, provoqué par un pneumatique (R) passant dessus, du au moins un rouleau (L) et dans lequel l'unité (T) de commande est constituée en outre pour la mise en circuit du au moins un entraînement (A), dès que le capteur (S) détecte, après la détection du mouvement de rotation, un pneumatique (R) qui est passé sur le au moins un rouleau (L).

2. Banc d'essai à rouleaux d'un frein suivant la revendication 1,
**caractérisé en ce que**
la au moins une unité (S) de capteur est une unité de capteur à triangulation.

3. Banc d'essai à rouleaux d'un frein suivant l'une des revendications précédentes,
**caractérisé en ce que**
l'unité (S) de capteur est constituée pour la détection d'une dérive horizontale du pneumatique (R) d'une position de consigne pouvant être prescrite dans une direction (X) horizontale.

4. Banc d'essai à rouleaux d'un frein suivant l'une des revendications précédentes,
**caractérisé en ce que**
l'unité (S) de capteur est constituée pour la détection d'un pneumatique (R) déplacé dans une direction (Y) et/ou dans une direction (Z) par rapport au au moins un rouleau (L), les directions (Y) et (Z) étant perpendiculaires entre elles et perpendiculaires à une direction (X) horizontale.

5. Banc d'essai à rouleaux d'un frein suivant la revendication précédente,
**caractérisé en ce que**
l'unité (S) de capteur est constituée pour la détection d'un pneumatique (R) passant sur le au moins un rouleau (L) ou sous lequel passe ce au moins un rouleau (L).

6. Banc d'essai à rouleaux d'un frein suivant l'une des revendications précédentes,
**caractérisé en ce que**
l'unité de commande est constituée pour l'émission d'un signal et/ou pour la mise hors circuit ou la mise en circuit du au moins un entraînement (A), dès que l'unité (S) de capteur signale un mouvement du pneumatique (R) par rapport au rouleau (L) en dehors de tolérances pouvant être prescrites.

7. Banc d'essai à rouleaux d'un frein suivant l'une des revendications précédentes,
**caractérisé en ce que**
l'unité (S) de capteur peut être orientée sur des façonnages irréguliers du pneumatique R) en rotation du véhicule, pour déterminer ainsi sa rotation et/ou sa vitesse de rotation.

8. Banc d'essai à rouleaux d'un frein suivant l'une des revendications précédentes, comprenant deux rouleaux (L1, L2) ou deux paires de rouleaux séparés l'un de l'autre pour respectivement un pneumatique (R1, R2) de véhicule, ainsi que respectivement au moins une unité (S1, S2) de capteur sans contact associé et l'unité (T) de commande,
**caractérisé en ce que**
l'unité (T) de commande est constituée pour la mise en circuit du au moins un entraînement (A), dès que, dans un créneau temporel pouvant être prescrit, les deux capteurs (S1, S2) détectent un objet.

9. Banc d'essai à rouleaux d'un frein suivant l'une des revendications précédentes,
**caractérisé en ce que**
l'unité (T) de commande est constituée pour la mise en circuit de l'entraînement (A), lorsque le pneumatique (R) qui passe est détecté dans un laps de temps pouvant être prescrit après la détection du mouvement de rotation.

10. Banc d'essai à rouleaux d'un frein suivant l'une des revendications précédentes, comprenant deux rouleaux (L1, L2) ou paire de rouleaux séparés l'un de l'autre pour respectivement un pneumatique (R1, R2) de véhicule et l'unité (T) de commande,
**caractérisé en ce que**
l'unité (T) de commande est constituée pour la mise en circuit du au moins un entraînement (A), dès que, dans un créneau temporel pouvant être prescrit, il est détecté un mouvement de rotation pour les deux rouleaux (L1, L2) ou les deux paires de rouleaux.
